# EUROPEAN PATENT APPLICATION

(11) **EP 2 713 601 A1**
(43) Date of publication of application: **02.04.2014**
(21) Application number: 13184945.7
(22) Date of filing: 18.09.2013
(51) Int. Cl.: H04N 1/40, H04N 1/56

(54) **Printing control apparatus, printing system, and computer readable recording medium stored with printing control program**

(30) Priority: 26.09.2012 JP 2012212229
(71) Applicant: Konica Minolta, Inc., Tokyo 100-7014 (JP)
(72) Inventor: Kawamura, Yuji, Tokyo, Tokyo 100-7014 (JP)
(74) Representative: Henkel, Breuer & Partner

(57) **Abstract**

A printing control apparatus capable of correctly reflecting a color adjustment for a preview image of print data is provided. The printing control apparatus (2) includes a generation unit (21) for generating image data for preview display (100) and attribute data (200) indicating an attribute of each pixel of the image data (100) by analyzing print data described by a page description language and a storage unit (24) for storing the image data for preview display (100) and the attribute data (200) generated by the generation unit (21) in connection with each other.

## Description

### Technical Field

The present invention relates to a printing control apparatus, a printing system, and a computer readable recording medium stored with a printing control program for changing a color conversion setting of print data.

### Background Art

Available is a technique, in which print data is stored in a storage unit of a printer controller and a color conversion setting of the print data is changed on a PC (Personal Computer) connected to a network. While viewing a preview image of the print data stored in the printer controller, the PC user adjusts a parameter such as a color conversion profile, a tone curve, and the like using a dedicated application.

In connection therewith, for example, Japanese Unexamined Publication No. 2007-013924 discloses a technique, in which an attribute (text/graphic/image or RGB/CMYK) of an object contained in print data is recognized and stored by being connected with a display area of the object on a preview image. The technique makes it possible that the PC user adjusts a parameter for each object having the same attribute with viewing the preview image.

Incidentally, a preview image of print data is obtained by reduction process of print image data generated by analyzing the print data. In reduction process of the print image data, an intermediate color is applied to a boundary area and others of an object to allow a reduced image to look beautiful.

However, in the boundary area applied with such an intermediate color, an attribute of the object is not recognized correctly in some cases. It is unfavorable that the attribute of the object is incorrectly recognized, since it is difficult to correctly reflect a color adjustment in the preview image.

### Summary of the Invention

### Problems to be Solved by the Invention

In view of the abovementioned problems, the present invention has been completed. Accordingly, one of objects of the present invention is to provide a printing control apparatus, a printing system, and a computer readable recording medium stored with a printing control program capable of correctly reflecting a color adjustment for a preview image of print data.

### Means for Solving the Problems

The abovementioned objects of the present invention can be achieved by the means described below.

(1) A printing control apparatus having a storage unit , characterized by comprising: a generation unit for generating image data for preview display and attribute data indicating an attribute of each pixel of the image data by analyzing print data described by a page description language, wherein said storage unit stores the image data for preview display and the attribute data generated by said generation unit in connection with each other.

(2) The printing control apparatus according to (1), characterized in that said generation unit specifies a resolution of intermediate data generated in the course of a process for analyzing the print data and developing the analyzed print data into print image data as a resolution suitable for preview display and generates the image data for preview display and the attribute data from the intermediate data.

(3) The printing control apparatus according to (1) or (2), characterized by further comprising: an information determination unit for determining whether the print data contains information to generate the image data for preview display, wherein when said information determination unit determines that the print data contains said information, said generation unit generates the image data for preview display and the attribute data.

(4) The printing control apparatus according to (1) or (2), characterized by further comprising: an object determination unit for determining whether the print data contains a plurality of objects with different attributes, wherein when said object determination unit determines that the print data contains said plurality of objects, said generation unit generates the image data for preview display and the attribute data.

(5) Aprinting system comprising a printing control apparatus and a terminal apparatus connected to said printing control apparatus via a network, characterized in that said printing control apparatus is a printing control apparatus according to any one of (1) to (4), wherein said printing control apparatus further comprises: a transmission unit for transmitting the image data for preview display and an attribute data indicating an attribute of each pixel of the image data obtained by analyzing print data described by a page description language, said terminal apparatus comprises: a reception unit for receiving the image data for preview display and the attribute data; a color conversion unit for performing color conversion process for the image data for preview display according to an attribute of each pixel specified by the attribute data; and a display unit for displaying an image based on the image data subjected to the color conversion process as a preview image.

(6) The printing system according to (5), characterized in that said terminal apparatus further comprises: an adjustment unit for adjusting a color conversion parameter, wherein said color conversion unit performs the color conversion process for the image data for preview display by using the color conversion parameter adjusted by said adjustment unit, and said display unit displays an image based on the image data subjected to the color conversion process by using the adjusted color conversion parameter.

(7) The printing system according to (5) or (6), characterized in that said terminal apparatus further comprises: a recognition unit for recognizing an attribute of an object to be subjected to the color conversion process; and an erasure unit for erasing objects having attributes other than the attribute recognized by said recognition unit from the image data for preview display, wherein said display unit selectively displays the object to be subjected to the color conversion process.

(8) The printing system according to (5) or (6), characterized in that said terminal apparatus further comprises: a notification unit for notifying said printing control apparatus of an attribute of an obj ect to be subj ected to the color conversion process, said printing control apparatus further comprises: an erasure unit for erasing objects having attributes other than the attribute notified by said notification unit from the image data for preview display, wherein said transmission unit transmits image data where objects other than the object to be subjected to the color conversion process are erased to said terminal apparatus, and said display unit selectively displays the object to be subjected to the color conversion process.

(9) A computer readable recording medium stored with a printing control program, said program causing a computer having a storage unit to execute a process, characterized in that said process comprises the steps of: (a) generating image data for preview display and attribute data indicating an attribute of each pixel of the image data by analyzing print data described by a page description language; and (b) storing the image data for preview display and the attribute data generated in said step (a) in said storage unit in connection with each other.

(10) The computer readable recording medium according to (9), characterized in that said step (a) specifies a resolution of intermediate data generated in the course of a process for analyzing the print data and developing the analyzed print data into print image data as a resolution suitable for preview display and generates the image data for preview display and the attribute data from the intermediate data.

(11) The computer readable recording medium according to (9) or (10), characterized in that said process further comprises the step of: (c) determining whether the print data contains information to generate the image data for preview display, whereby said step (a) generates the image data for preview display and the attribute data when said step (c) determines that the print data contains said information.

(12) The computer readable recording medium according to (9) or (10), characterized in that said process further comprises the step of: (d) determining whether the print data contains a plurality of objects with different attributes, whereby said step (a) generates the image data for preview display and the attribute data when said step (d) determines that the print data contains said plurality of objects.

### Effect of the Invention

According to the present invention, as image data for preview display and attribute data indicating an attribute of each pixel of the image data are directly generated from print data, a display area of an object on a preview image and an attribute of the object corresponding to the area accord with each other in a pixel unit. Therefore, it becomes possible to correctly reflect color adjustment in a preview image of print data.

### Brief Description of the Drawings

Fig. 1 is a block diagram illustrating an entire configuration of a printing system.

Fig. 2 is a block diagram illustrating a schematic configuration of a PC.

Fig. 3 is a block diagram illustrating storage contents of a hard disk of the PC.

Fig. 4 is a block diagram illustrating a schematic configuration of a printer controller.

Fig. 5 is a block diagram illustrating storage contents of a hard disk of the printer controller.

Fig. 6 is a block diagram illustrating a schematic configuration of a printer.

Fig. 7 is a flowchart illustrating steps of print control process executed by the printer controller.

Fig. 8 is a flowchart illustrating steps of low-resolution RIP process indicated in S104 of Fig. 7.

Fig. 9 is a chart illustrating one example of image data for preview display and a tag bit.

Fig. 10 is a flowchart illustrating steps of a first PDL analysis process indicated in S201 of Fig. 8.

Fig. 11 is a flowchart illustrating steps of drawing process indicated in S202 of Fig. 8.

Fig. 12 is a flowchart following Fig. 11.

Fig. 13 is a flowchart illustrating steps of normal RIP process indicated in S103 of Fig. 7.

Fig. 14 is a flowchart illustrating steps of a second PDL analysis process indicated in S501 of Fig. 13.

Fig. 15 is a chart illustrating one example of a DLP editing screen.

Fig. 16 is a chart illustrating one example of a DLP adjustment screen.

Fig. 17 is a flowchart illustrating steps of image selection display process executed by the PC.

Fig. 18 is a flowchart illustrating steps of image selection display process executed by the printer controller.

Fig. 19 is a flowchart illustrating steps of print control process according to a second embodiment of the present invention.

### Mode for Carrying Out the Invention

The embodiments of this invention will be described below with reference to the accompanying drawings.

(First Embodiment)

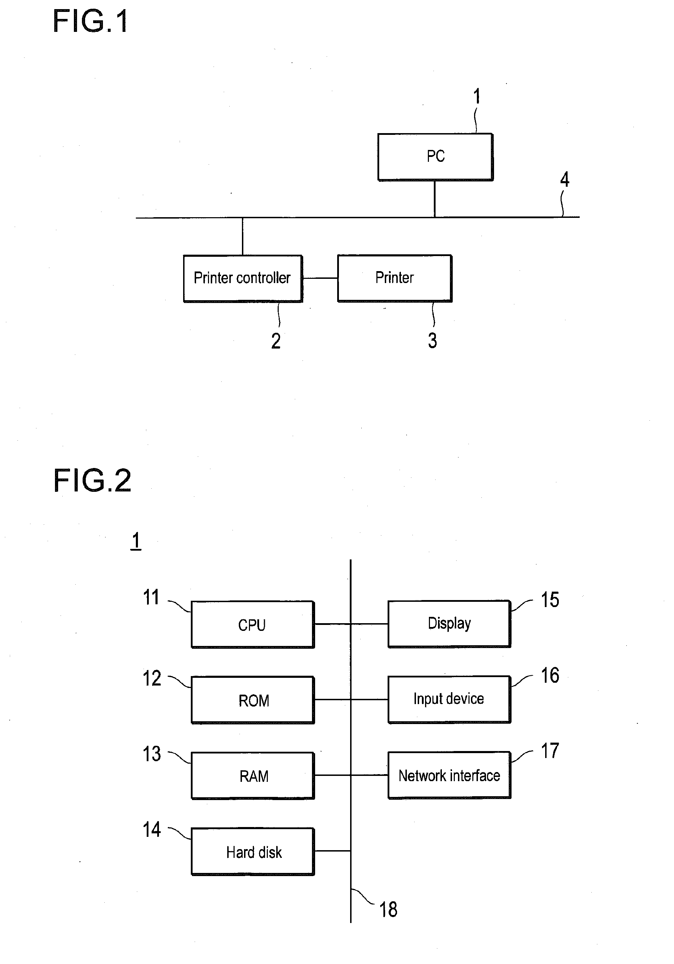

Fig. 1 is a block diagram illustrating an entire configuration of a printing system according to the first embodiment of the present invention. The printing system according to the present embodiment includes a PC 1 as a terminal apparatus, a printer controller (hereinafter referred to simply as a "controller") 2 as a printing control apparatus, and a printer 3 as a printing apparatus. The PC 1 and the controller 2 are communicably connected to each other via a network 4.

The network 4 includes a LAN (Local Area Network) making connections between computers and network devices in accordance with a standard such as the Ethernet, Token Ring, FDDI (Fiber Distributed Data Interface), and the like, a WAN (Wide Area Network) making connections between LANs using a dedicated line, or the like. The controller 2 and the printer 3 are connected to each other via a dedicated interface bus such as an IEEE 1394 serial bus, a USB (Universal Serial Bus), and the like. However, it is possible that the controller 2 and the printer 3 are connected to each other via the network 4. The type and number of devices connected to the network 4 are not limited to the example illustrated in Fig. 1.

Fig. 2 is a block diagram illustrating a schematic configuration of the PC 1. The PC 1 includes a CPU (Central ProcessingUnit) 11, a ROM (Read Only Memory) 12, a RAM (Random Access Memory) 13, a hard disk 14, a display 15, an input device 16, and a network interface 17, and these are connected to each other via a bus 18 for transmitting and receiving signals.

The CPU 11 controls abovementioned each of the units and performs various types of arithmetic processes in accordance with programs. The ROM 12 stores various types of programs and data. The RAM 13 temporarily stores programs and data as a work area. The hard disk 14 stores various types of programs including an operating system (OS) and various types of data.

The display 15 is, for example, a liquid crystal display and displays various types of information as a display unit. The input device 16 includes a pointing device such as a mouse and the like and a keyboard, and is used to perform various types of inputs.

The network interface 17 is an interface for communicating with other devices via the network 4 using a standard such as the Ethernet, Token Ring, FDDI, and the like. The network interface 17 serves as a reception unit, and receives image data for preview display and a tag bit that is attribute data indicating an attribute (for example, color space) of each pixel of the image data from the controller 2.

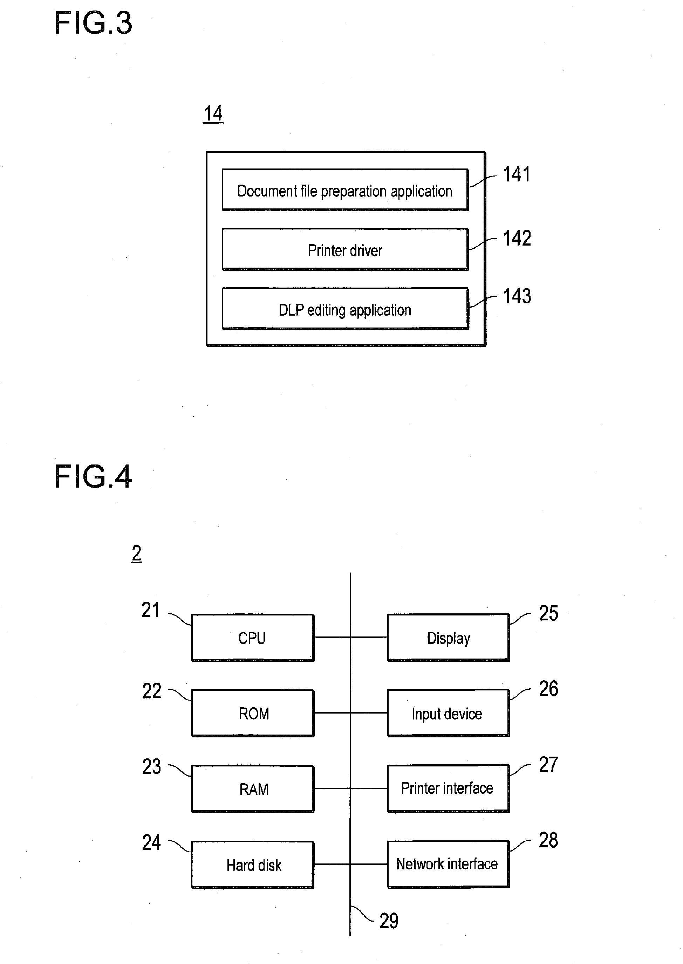

Fig. 3 is a block diagram illustrating storage contents of the hard disk 14 of the PC 1. In the hard disk 14, there are installed a document file preparation application 141 for preparing a document file, a printer driver 142 for converting a document file into print data described using a page description language (PDL) able to be interpreted by the controller 2, and a DLP editing application 143 for editing a DLP (Device Link Profile) that is a color conversion parameter.

The CPU 11 of the PC 1 executes a program of the DLP editing application 143 to function as a color conversion unit, an adjustment unit, a recognition unit, and an erasure unit. Herein, the color conversion unit performs color conversion process for image data for preview display in accordance with an attribute of a pixel specified by a tag bit. The adjustment unit adjusts a DLP applied to the color conversion process. The recognition unit recognizes an attribute of an object to be subjected to the color conversion process. The erasure unit erases objects having attributes other than an attribute recognized by the recognition unit from image data for preview display. A specific processing manner of each unit will be described later.

Fig. 4 is a block diagram illustrating a schematic configuration of the controller 2. The controller 2 includes a CPU 21, a ROM 22, a RAM 23, a hard disk 24, a display 25, an input device 26, a printer interface 27, and a network interface 28, and these are connected to each other via a bus 29 for transmitting and receiving signals. Herein, of the units of the controller 2, description of portions having the same functions as the units of the PC 1 will be omitted to avoid overlapping description.

The printer interface 27 is an interface for communicating with the printer 3 locally connected. The network interface 28 serving as a transmission unit transmits image data for preview display and a tag bit to the PC 1.

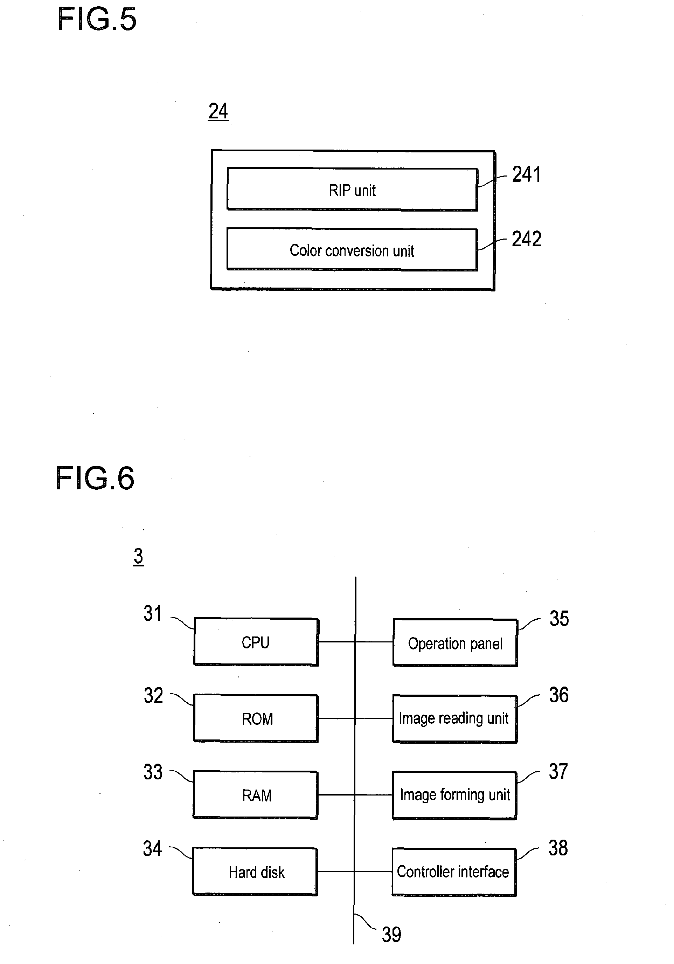

Fig. 5 is a block diagram illustrating storage contents of the hard disk 24 of the controller 2. The hard disk 24 stores programs corresponding to a RIP unit 241 and a color conversion unit 242. The RIP unit 241 executes rasterizing process (hereinafter referred to as "RIP process") for analyzing print data received from the PC 1 and developing the analyzed print data into image data in a bitmap format. The color conversion unit 242 performs color conversion process for image data. Herein, the functions of the RIP unit 241 and the color conversion unit 242 are exhibited via execution of programs corresponding to the respective units by the CPU 21.

The CPU 21 of the controller 2 executes programs stored in the hard disk 24 to function as an information determination unit and a generation unit. The information determination unit determines whether print data contains information to generate image data for preview display. The generation unit analyzes print data described by a page description language such as PS (PostScript (a registered trademark), PDF (Portable Document Format), and the like and generates image data for preview display and a tag bit. A specific processing manner of each unit will be described later. Further, the hard disk 24 serving as a storage unit stores image data for preview display and a tag bit in connection with each other.

Fig. 6 is a block diagram illustrating a schematic configuration of the printer 3. The printer 3 includes a CPU 31, a ROM 32, a RAM 33, a hard disk 34, an operation panel 35, an image reading unit 36, an image forming unit 37, and a controller interface 38, and these are connected to each other via a bus 39 for transmitting and receiving signals. Herein, of the units of the printer 3, description of portions having the same functions as the units of the PC 1 will be omitted to avoid overlapping description.

The operation panel 35 includes a touch panel, a numerical keypad, a start button, a stop button, and the like and is used to display various types of information and input various types of instructions.

The image reading unit 36 exposes an original document set in a predetermined reading position or an original document conveyed to a predetermined reading position by an ADF (Automatic Document Feeder) to light using a light source such as a fluorescent lamp and the like and photoelectrically converts the resulting reflective light using an imaging device such as a CCD image sensor and the like to generate image data from the resulting electrical signal.

The image forming unit 37 forms an image based on image data onto a recording medium such as a sheet and the like using a well-known image forming process such as an electrophotographic process and the like. The image forming unit 37 forms an image using toners of four colors of C (cyan), M (magenta), Y (yellow), and K (black).

The controller interface 38 is an interface for communicating with the controller 2 locally connected.

Herein, each of the PC 1, the controller 2, and the printer 3 possibly includes an element other than the abovementioned elements or possibly excludes a part of the abovementioned elements.

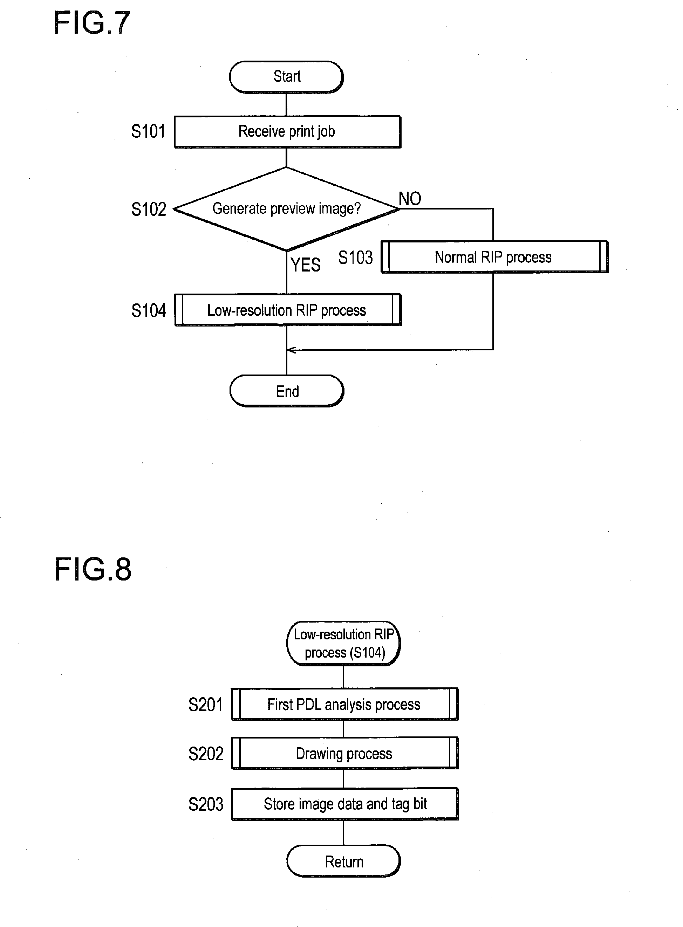

In the printing system of the present embodiment configured as described above, in the case where the PC 1 transmits print data to the controller 2, the controller 2 analyzes the print data to generate image data for preview display and a tag bit that is attribute data indicating an attribute of each pixel of the image data. With reference to Fig. 7 to Fig. 18, an operation of the printing system according to the present embodiment will be described below.

Fig. 7 is a flowchart illustrating steps of print control process executed by the controller 2. An algorism illustrated by the flowchart of Fig. 7 is stored on the hard disk 24 of the controller 2 as a program and executed by the CPU 21.

Initially, the controller 2 receives a print job (S101). More specifically, the controller 2 receives print data transmitted from the PC 1.

Next, the controller 2 determines whether to generate a preview image (S102). The print data is able to contain information to generate a preview image and then the controller 2 determines whether to generate a preview image based on the presence or absence of the information. The information to generate a preview image is added to the print data by the printer driver 142, for example, based on a user operation.

In the case of determining that no preview image is generated (S102: NO), the controller 2 executes normal RIP process (S103) and then ends the process. Specifically, the controller 2 executes normal RIP process for print data received by the process indicated in S101 to generate print image data.

On the other hand, in the process indicated in S102, when determining that a preview image is generated (S102: YES), the controller 2 executes low-resolution RIP process (S104) and then ends the process. Specifically, the controller 2 executes RIP process with a specified resolution for print data received by the process indicated in S101 and then generates image data for preview display and a tag bit that is attribute data indicating an attribute of each pixel of the image data.

Fig. 8 is a flowchart illustrating steps of low-resolution RIP process.

Initially, the controller 2 executes a first PDL analysis process (S201). Specifically, the controller 2 analyzes print data received by the process indicated in S101 of Fig. 7 and generates intermediate data having a specified resolution of 300 dpi. The intermediate data is data, described by an intermediate language, temporarily generated in the course of a process for analyzing print data and developing the analyzed print data into print image data.

Next, the controller 2 executes drawing process (S202). Specifically, the controller 2 generates image data for preview display and a tag bit that is attribute data indicating an attribute of each pixel of the image data based on the intermediate data generated by the process indicated in S201.

Then, the controller 2 stores the image data and the tag bit (S203) and ends the process. More specifically, the controller 2 stores the image data and the tag bit generated by the process indicated in S202 on the hard disk 24 in connection with each other to end the process.

As described above, according to the processes of the flowchart illustrated in Fig. 8, a resolution of intermediate data obtained by analyzing print data is specified as a resolution suitable for preview display, and from the intermediate data, image data for preview display and a tag bit indicating an attribute of each pixel of the image data are generated.

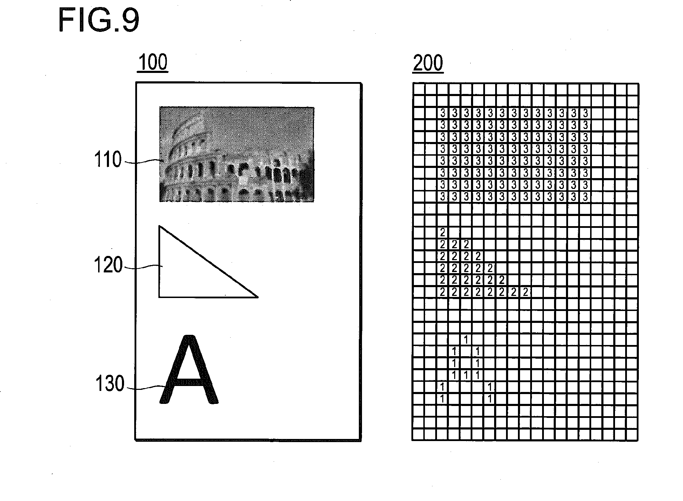

Fig. 9 is a chart illustrating one example of image data for preview display and a tag bit.

Image data for preview display 100 is, as the same as print image data, image data of a bitmap format generated by analyzing print data described by a page description language. The image data for preview display 100 is generated by changing a resolution of the print data. For example, when a resolution of print image data specified by print data is 1200 dpi, the image data for preview display 100 is generated at a resolution of 300 dpi.

A tag bit 200 is attribute data indicating an attribute (object type and color space) of each pixel of the image data for preview display 100. The tag bit 200 is generated for each page by analyzing print data described by a page description language. In the tag bit 200, a value indicating an attribute of an object is written with respect to each pixel of the image data 100 per page. Such a configuration makes it possible that with reference to the tag bit 200, an attribute of an object contained in image data is specified in a pixel unit and color conversion process is performed according to the attribute of the object.

Herein, Fig. 9 illustrates a tag bit where a value indicating a color space is written as an attribute of each pixel of image data. Specifically, as listed in Table 1 described below, with respect to a pixel corresponding to an image object 110 defined by an RGB color space, "3" that is a value indicating the RGB color space is written, and with respect to a pixel corresponding to a graphic object 120 defined by a CMYK color space, "2" that is a value indicating the CMYK color space is written. Further, with respect to a pixel corresponding to a text object 130 defined by a gray color space, "1" that is a value indicating the gray color space is written.

**Table 1**

| Tag Bit | Meaning of Tag Bit | Color Value of Corresponding Image Data |
|---|---|---|
| 0(000) | Reserved | Reserved |
| 1(001) | Gray color space | C plate = 0, M plate = 0, Y plate = 0, K plate = color value of Gray |
| 2(010) | CMYK color space | C plate = color value of C, M plate = color value of M, Y plate = color value of Y, K plate = color value of K |
| 3(011) | RGB color space | C plate = color value of R, M plate = color value of G, Y plate = color value of B, K plate = 0 |
| 4 (100) | CIE color space | C plate = color value of X, M plate = color value of Y, Y plate = color value of Z, K plate = 0 |
| 5 (101) | Separation | C plate = color value of C, M plate = color value of M, Y plate = color value of Y, K plate = color value of K |

The image data for preview display 100 and the tag bit 200 obtained by analyzing print data are stored on the hard disk 24 of the controller 2 in connection with each other. Further, when a profile set connecting a plurality of DLPs with each other is specified in print data, a name of the profile set is stored on the hard disk 24 in connection with the image data for preview display 100 and the tag bit 200. The image data for preview display 100 and the tag bit 200 stored on the hard disk 24 are transmitted to the PC 1 in response to a request from the PC 1. An operation of the PC 1 for changing a color conversion setting by receiving the image data for preview display 100 and the tag bit 200 will be described later.

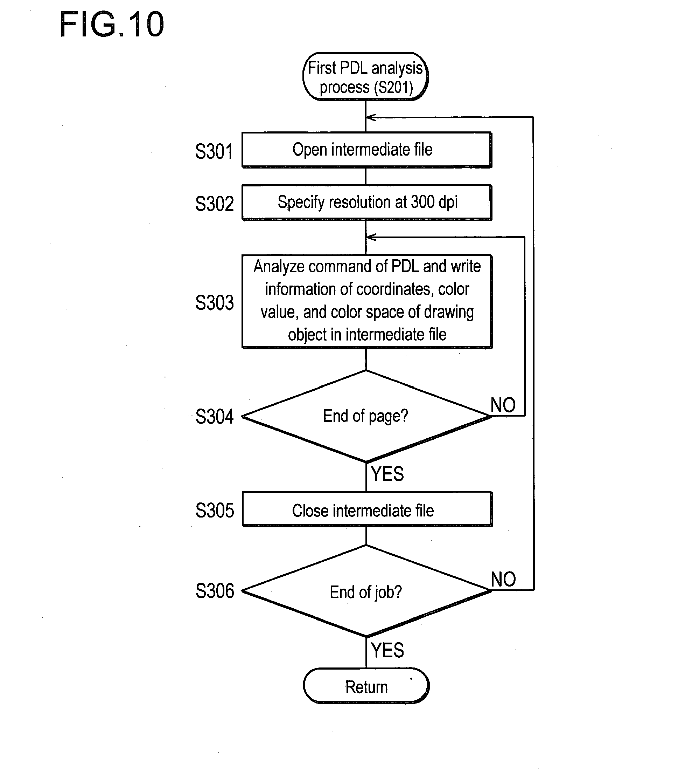

Next, with reference to Fig. 10 to Fig. 12, the first PDL analysis process and the drawing process indicated in S201 and S202 of Fig. 8, respectively, will be described in detail. The execution of the first PDL analysis process and the drawing process generates the image data for preview display 100 and the tag bit 200.

Fig. 10 is a flowchart illustrating steps of the first PDL analysis process indicated in S201 of Fig. 8.

Initially, the controller 2 opens an intermediate file (S301). More specifically, with print job execution, the controller 2 generates an intermediate file in a page unit and then opens the thus-generated intermediate file.

Next, the controller 2 specifies a resolution of the intermediate file at 300 dpi (S302). More specifically, the controller 2 specifies a resolution of the intermediate file opened by the process indicated in S301 at 300 dpi in order to generate image data for preview display.

Next, the controller 2 analyzes a command of print data and writes information of coordinates, a color value, and a color space of a drawing object in the intermediate file (S303). More specifically, the controller 2 analyzes a command of print data described by a page description language and then writes, as attribute information, information of coordinates, a color value, and a color space of one drawing object in the intermediate file opened by the process indicated in S301.

Next, the controller 2 determines whether the page has ended (S304). More specifically, the controller 2 determines whether the process indicated in S303 has been executed for every drawing object contained in image data of one page.

In the case of determining that the page has not ended (S304: NO), the controller 2 repeats the process of S303 until the page is determined to have ended. On the other hand, in the case of determining that the page has ended (S304: YES), the controller 2 closes the intermediate file (S305).

Next, the controller 2 determines whether the job has ended (S306). In the case of determining that the job has not ended (S306: NO), the controller 2 repeats the processes of S301 to S305 until the job is determined to have ended. On the other hand, in the case of determining that the job has ended (S306: YES), the controller 2 ends the process.

As described above, according to the processes of the flowchart illustrated in Fig. 10, print data is analyzed and then intermediate data having a specified resolution of 300 dpi is generated.

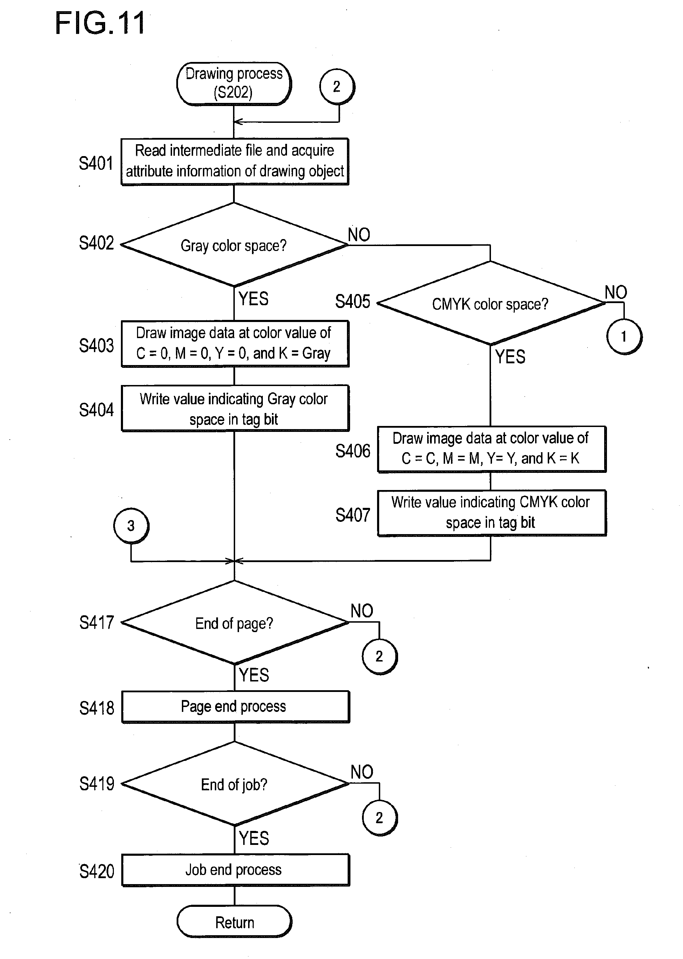

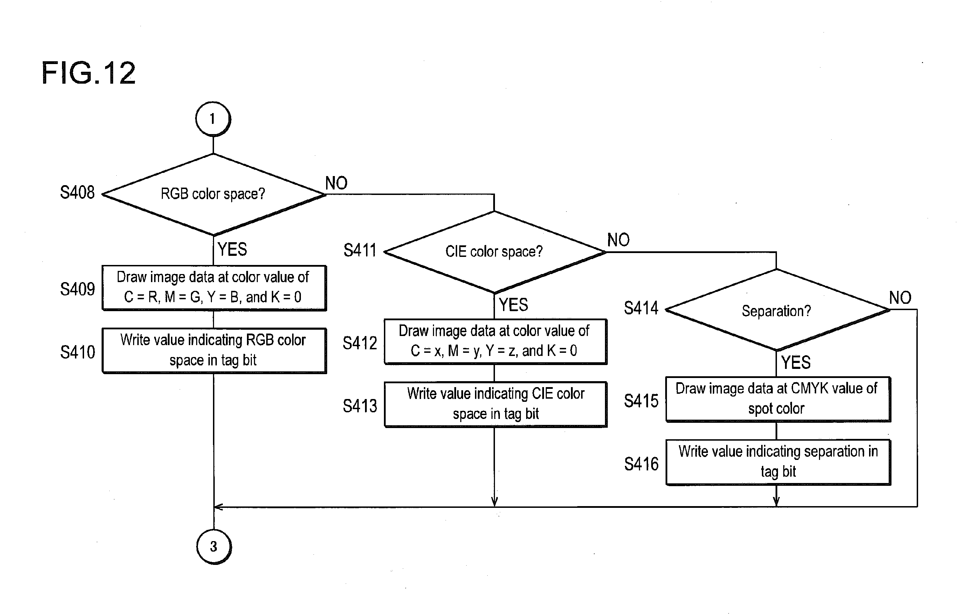

Fig. 11 and Fig. 12 are flowcharts each illustrating the steps of the drawing process indicated in S202 of Fig. 8.

Initially, the controller 2 reads an intermediate file and then acquires attribute information of a drawing object (S401). More specifically, the controller 2 reads an intermediate file generated by the first PDL analysis process indicated in S201 and then acquires attribute information of one drawing object.

Next, the controller 2 determines whether a color space of the drawing object is a gray color space (S402). More specifically, the controller 2 determines whether a color space of a drawing object is a gray color space based on color space information contained in the attribute information acquired by the process indicated in S401.

In the case of determining that the color space of the drawing object is a gray color space (S402: YES), the controller 2 draws image data at a color value of C = 0, M = 0, Y = 0, and K = Gray (S403). In other words, the controller 2 applies the color value of the gray color space to the color value of the CMYK color space and generates image data of the drawing object.

Next, the controller 2 writes a value indicating the gray color space in a tag bit (S404). More specifically, the controller 2 writes the value indicating the gray color space in a tag bit generated with the execution of drawing process as an attribute of a pixel corresponding to the drawing object.

On the other hand, in the process indicated in S402, in the case of determining that the color space of the drawing object is not a gray color space (S402: NO), the controller 2 determines whether the color space of the drawing object is a CMYK color space (S405).

In the case of determining that the color space of the drawing object is a CMYK color space (S405: YES), the controller 2 draws image data at a color value of C = C, M=M, Y=Y, andK=K (S406). Inotherwords, the controller 2 applies the color value of the CMYK color space as is and generates image data of the drawing object.

Next, the controller 2 writes a value indicating the CMYK color space in a tag bit (S407). More specifically, the controller 2 writes the value indicating the CMYK color space in the tag bit as an attribute of a pixel corresponding to the drawing object.

On the other hand, in the process indicated in S405, in the case of determining that the color space of the drawing object is not a CMYK color space (S405: NO), the controller 2 determines whether the color space of the drawing object is an RGB color space (S408).

In the case of determining that the color space of the drawing object is an RGB color space (S408: YES), the controller 2 draws image data at a color value of C = R, M=G, Y=B, and K=0 (S409). Inotherwords, the controller 2 applies the color value of the RGB color space to the color value of the CMYK color space and generates image data of the drawing object.

Next, the controller 2 writes a value indicating the RBG color space in a tag bit (S410). More specifically, the controller 2 writes the value indicating the RGB color space in the tag bit as an attribute of a pixel corresponding to the drawing object.

On the other hand, in the process indicated in S408, in the case of determining that the color space of the drawing object is not an RGB color space (S408: NO), the controller 2 determines whether the color space of the drawing object is a CIE color space (S411).

In the case of determining that the color space of the drawing object is a CIE color space (S411: YES), the controller 2 draws image data at a color value of C = x, M = y, Y = z, and K = 0 (S412). In other words, the controller 2 applies the color value of the CIE color space to the color value of the CMYK color space and generates image data of the drawing object.

Next, the controller 2 writes a value indicating the CIE color space in a tag bit (S413). More specifically, the controller 2 writes the value indicating the CIE color space in the tag bit as an attribute of a pixel corresponding to the drawing object.

On the other hand, in the process indicated in S411, in the case of determining that the color space of the drawing object is not a CIE color space (S411: NO), the controller 2 determines whether the color space of the drawing object is a separation color space (S414). More specifically, the controller 2 determines whether the color space of the drawing object is a separation color space where a spot color is specified in print data.

In the case of determining that the color space of the drawing object is a separation color space (S414: YES), the controller 2 draws image data at a CMYK color value of the spot color (S415). Next, the controller 2 writes a value indicating the separation color space in a tag bit (S416). More specifically, the controller 2 writes the value indicating the separation color space in the tag bit as an attribute of a pixel corresponding to the drawing object.

On the other hand, in the process indicated in S414, in the case of determining that the color space of the drawing object is not a separation color space (S414: NO), the controller 2 moves forward to execute the process of S417.

As described above, according to the processes indicated in S401 to S416, while a color space attribute of a drawing object is written in a tag bit, image data of one drawing object is generated. Herein, it is possible to write values indicating two attributes of a color space and type of a drawing object in the tag bit, instead of a value indicating only the color space of the drawing object.

Next, the controller 2 determines whether the page has ended (S417). More specifically, the controller 2 determines whether the processes indicated in S401 to S416 have been executed for every drawing object contained in image data of one page.

In the case of determining that the page has not ended (S417: NO), the controller 2 repeats the processes of S401 to S416 until the page is determined to have ended. On the other hand, in the case of determining that the page has ended (S417: YES), the controller 2 executes page end process (S418). More specifically, the controller 2 executes page end process for completing image data of one page.

Next, the controller 2 determines whether the job has ended (S419). In the case of determining that the job has not ended (S419: NO), the controller 2 repeats the processes of S401 to S418 until the job is determined to have ended.

On the other hand, in the case of determining that the job has ended (S419: YES), the controller 2 executes job end process (S420) and ends the process. More specifically, the controller 2 executes job end process for adding information indicating the end of the file to the image data and then ends the process.

As described above, according to the processes of the flowcharts illustrated in Fig. 11 and Fig. 12, image data for preview display and a tag bit indicating an attribute of each pixel of the image data are generated from intermediate data having a specified resolution of 300 dpi.

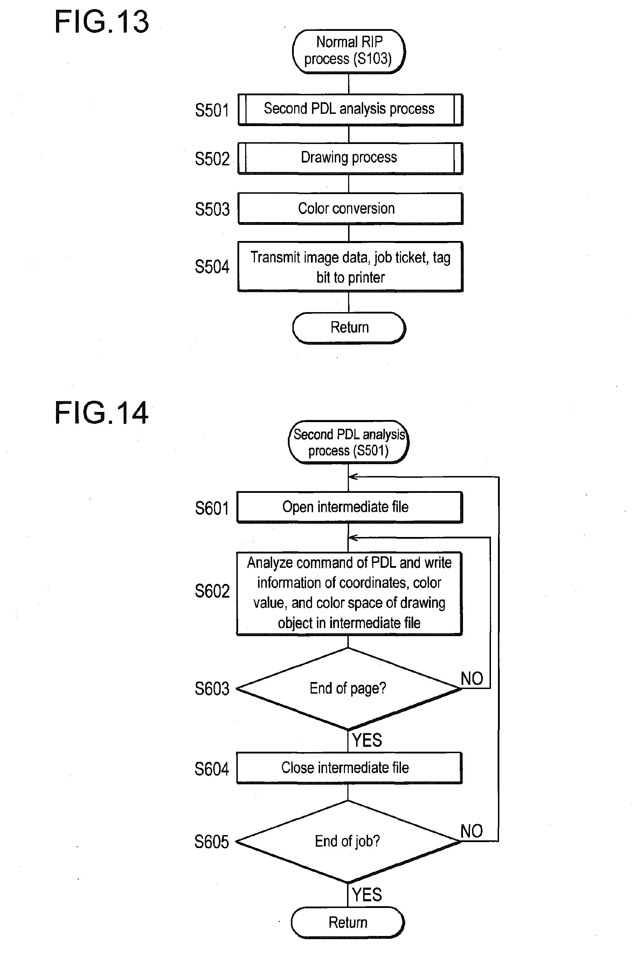

Next, with reference to Fig. 13 and Fig. 14, the normal RIP process indicated in S103 of Fig. 7 will be described in detail. The execution of the normal RIP process generates print image data.

Fig. 13 is a flowchart illustrating steps of the normal RIP process indicated in S103 of Fig. 7.

Initially, the controller 2 executes a second PDL analysis process (S501). Specifically, the controller 2 analyzes print data and generates intermediate data without a change in resolution.

Fig. 14 is a flowchart illustrating steps of the second PDL analysis process indicated in S501 of Fig. 13. The processes of the flowchart illustrated in Fig. 14 is the same as the processes of the flowchart illustrated in Fig. 10 except that a resolution specified by print data is used without changing the resolution and therefore, detailed description of the second PDL analysis process will be omitted.

Next, the controller 2 executes drawing process (S502). Specifically, the controller 2 generates print image data and a tag bit based on the intermediate data generated by the process indicated in S501. Herein, since the drawing process indicated in S502 is the same as the process indicated in S202 of Fig. 8, detailed description of the former will be omitted.

Next, the controller 2 executes color conversion process (S503). More specifically, the controller 2 executes color conversion process based on a profile set specified by the print data for the print image data generated by the process indicated in S502. Herein, differently from the present embodiment, the color conversion process is possibly executed in the second PDL analysis process indicated in S501.

Then, the controller 2 transmits image data, a job ticket, and a tag bit to the printer 3 (S504) and then ends the process. More specifically, the controller 2 transmits image data color-converted by the process indicated in S503 and a tag bit generated by the process indicated in S502 as well as a job ticket obtained by analyzing print data to the printer 3 and then ends the process. The printer 3 performs compression/extension process and color conversion process for print image data as necessary and then forms an image based on the print image data onto a sheet.

As described above, according to the print control process of the present embodiment, when print data contains no information to generate a preview image, normal RIP process is executed and then print image data is generated. On the other hand, when the print data contains information to generate a preview image, the print data is analyzed and then image data for preview display and a tag bit indicating an attribute of each pixel of the image data are generated.

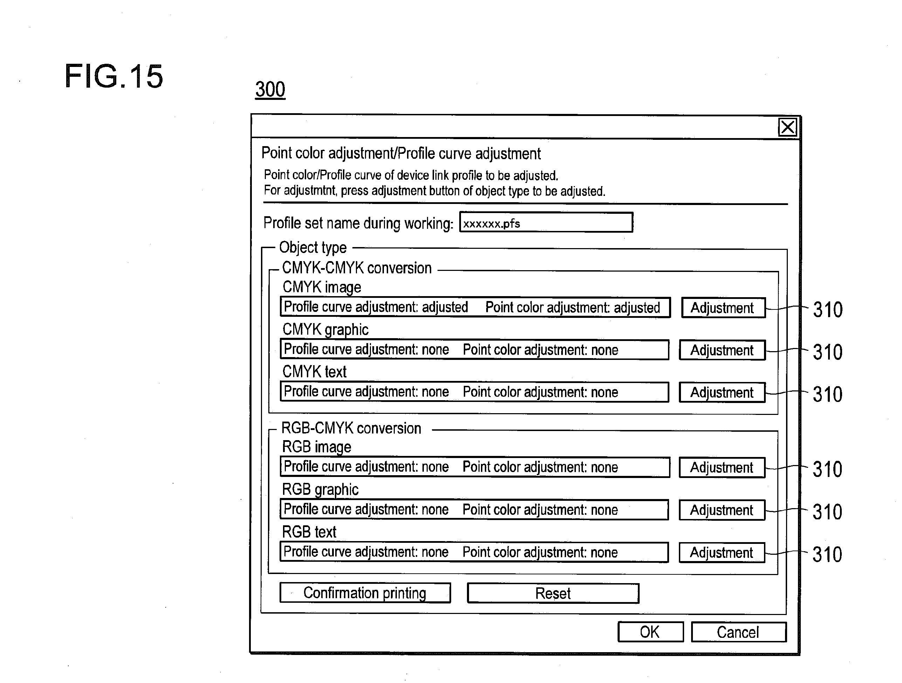

With reference to Fig. 15 to Fig. 18, an operation of the PC 1 for changing a color conversion setting by displaying an image based on image data for preview display will be described below.

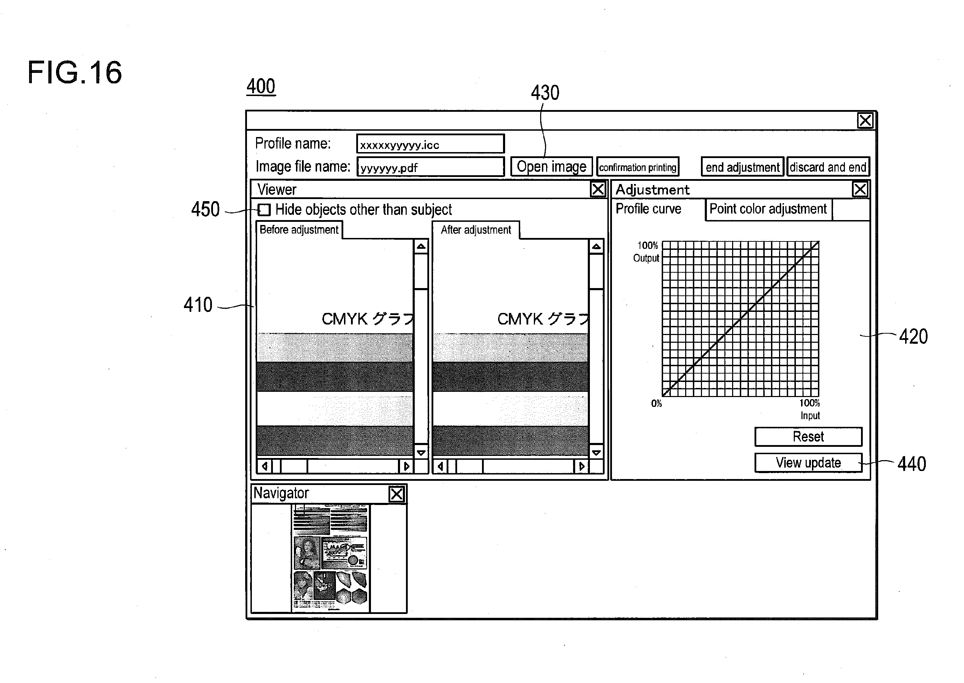

Fig. 15 is a chart illustrating one example of a DLP editing screen displayed on the display 15 of the PC 1, and Fig. 16 is a chart illustrating one example of a DLP adjustment screen.

In the PC 1, the user specifies one profile set and then edits a DLP connected with the specified profile set. In the profile set, a CMYK-CMYK conversion DLP and an RGB-CMYK conversion DLP are connected with each other for each object type of a graphic, image, and text.

In a DLP editing screen 300, six adj ustment buttons 310 corresponding to six types of DLPs connected with a profile set specified by the user are provided. Of the six adjustment buttons 310, when one adjustment button 310 is pressed down (clicked) by a mouse operation of the user, a DLP adjustment screen 400 for adjusting a profile curve and a point color of a corresponding DLP is displayed. A DLP to be adjusted is stored in the PC 1 or the controller 2.

The DLP adjustment screen 400 includes a viewer unit 410 for displaying a preview image and an adjustment unit 420 for adjusting a DLP.

The viewer unit 410 displays a preview image prior to color adjustment and a preview image after color adjustment. When an "Open Image" button 430 of the DLP adjustment screen 400 is pressed down, of the image data for preview display stored in the controller 2, a list of image data connected with a profile set specified by the DLP editing screen 300 is displayed. An image based on one piece of image data selected from the list by a user operation is displayed on the viewer unit 410 as a preview image.

The adjustment unit 420 displays a profile curve of a DLP selected on the DLP editing screen 300. While viewing a preview image displayed on the viewer unit 410, the user of the PC 1 adjusts the DLP on the adjustment unit 420. After adjusting the DLP, when a "View Update" button 440 is pressed down, a color of the image displayed on the viewer unit 410 is updated based on the adjusted DLP.

As described above, the printing system of the present embodiment directly generates image data for preview display and a tag bit from print data. Therefore, a display area of an object on a preview image and an attribute of the object corresponding to the area accord with each other in a pixel unit. Such a configuration makes it possible to correctly reflect color adjustment in a preview image of print data.

(Image Selection Display Process)

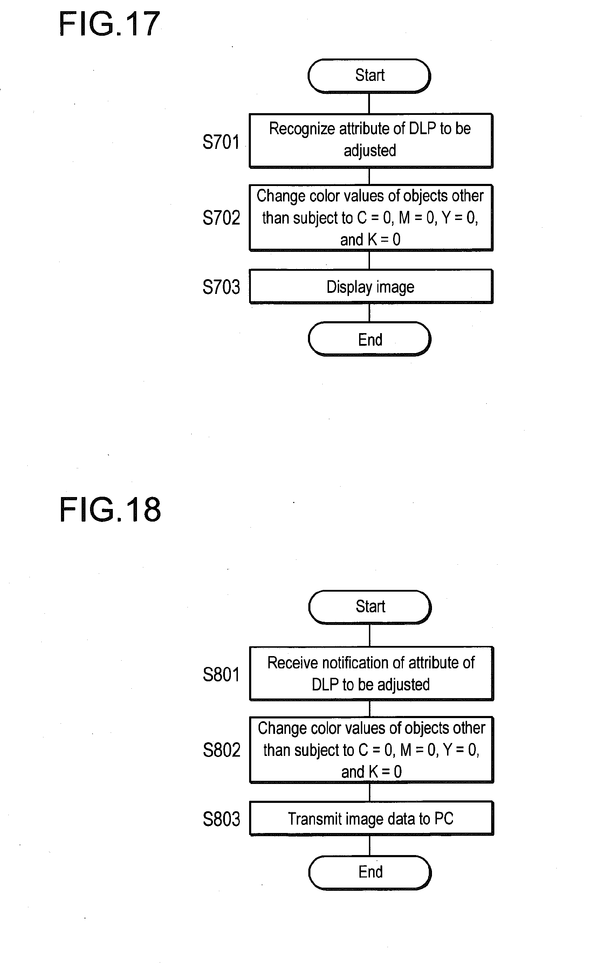

Next, with reference to Fig. 17, a process for selectively displaying a specific object on the viewer unit 410 of the DLP adjustment screen 400 will be described.

When a "Hide Objects Other Than Subject" check box 450 on the DLP adjustment screen 400 is checked, only an object having the same attribute as a DLP selected by the DLP editing screen 300 as a subject to be adjusted is displayed on the viewer unit 410. For example, when an adjustment button 310 of "CMYK Text" has been pressed down on the DLP editing screen 300 and a DLP of "CMYK Text" has been selected, only an object having a color space as a CMYK color space and an object type as a text is displayed on the viewer unit 410.

Fig. 17 is a flowchart illustrating steps of image selection display process executed by the PC 1. Herein, an algorism illustrated by the flowchart of Fig. 17 is stored on the hard disk 14 of the PC 1 as a program and executed by the CPU 11.

Initially, PC 1 recognizes an attribute of a DLP to be adjusted (S701). More specifically, the PC 1 recognizes an attribute of a DLP where the adjustment button 310 is pressed down on the DLP editing screen 300.

Next, the PC 1 changes color values of objects having attributes other than the subject to C = 0, M = 0, Y = 0, and K = 0 (S702). More specifically, while specifying an attribute of an object referring to a tag bit, the PC 1 changes color values of objects having attributes other than the attribute recognized by the process indicated in S701 to C = 0, M = 0, Y = 0, and K = 0.

Next, the PC 1 displays an image based on image data (S703) and then ends the process. More specifically, the PC 1 displays an image based on image data where color values of a part of the objects are changed by the process indicated in S702 on the viewer unit 410 as a preview image.

As described above, according to the processes of the flowchart illustrated in Fig. 17, objects having attributes other than an attribute of a DLP to be adjusted are hidden and then only an object having the same attribute as the DLP to be adjusted is displayed on the viewer unit 410.

(Modified Example)

The abovementioned image selection display process is possibly executed by the controller 2.

In the present modified example, the CPU 11 of the PC 1 executes a program stored on the hard disk 14 to function as a notification unit for notifying the controller 2 of an attribute of an object to be subjected to color conversion process. Further, the CPU 21 of the controller 2 executes a program stored on the hard disk 24 to function as an erasure unit for erasing objects having attributes other than an attribute notified by the notification unit from image data for preview display.

Fig. 18 is a flowchart illustrating steps of image selection display process executed by the controller 2. Herein, an algorism illustrated by the flowchart of Fig. 18 is stored on the hard disk 24 of the controller 2 as a program and executed by the CPU 21.

Initially, the controller 2 receives a notification concerning an attribute of a DLP to be adjusted (S801). More specifically, an attribute of a DLP to be adjusted is notified from the PC 1, and then the controller 2 receives a notification concerning the attribute of the DLP to be adjusted.

Next, the controller 2 changes color values of objects having attributes other than the subject to C = 0, M = 0, Y = 0, and K = 0 (S802). More specifically, the controller 2 changes color values of objects having attributes other than the attribute notified by the process indicated in S801 to C = 0, M = 0, Y = 0, and K = 0.

Next, the controller 2 transmits image data to the PC 1 (S803) and ends the process. More specifically, the controller 2 transmits image data where color values of a part of the objects are changed by the process indicated in S802 to the PC 1.

As described above, according to the processes of the flowchart illustrated in Fig. 18, image data for preview display containing only an object having the same attribute as the DLP to be adjusted is transmitted to the PC 1. In the PC 1, only the object having the same attribute as the DLP to be adjusted is displayed on the viewer unit 410 based on the image data received from the controller 2.

According to such a configuration, it becomes unnecessary to transmit a tag bit to the PC 1 from the controller 2.

(Second Embodiment)

In the first embodiment, when print data contains information to generate image data for preview display, the image data for preview display was generated. In the present embodiment, when print data contains a plurality of objects with different attributes, image data for preview display is generated.

In the present embodiment, the CPU 21 of the controller 2 executes a program stored on the hard disk 24 to function as an object determination unit for determining whether print data contains a plurality of objects with different attributes. A configuration of the printing system according to the present embodiment is the same as in the first embodiment except that a determination is made whether print data contains a plurality of objects with different attributes, and therefore, detailed description of the printing system of the present embodiment will be omitted.

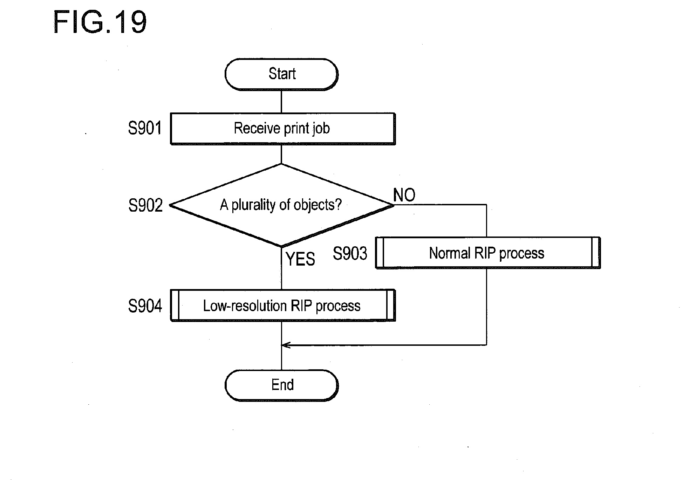

Fig. 19 is a flowchart illustrating steps of print control process according to the second embodiment of the present invention. An algorism illustrated by the flowchart of Fig. 19 is stored on the hard disk 24 of the controller 2 as a program and executed by the CPU 21.

Initially, the controller 2 receives a print job (S901). Next, the controller 2 determines whether print data contains a plurality of objects with different attributes (S902). More specifically, the controller 2 determines whether, for example, the print data contains a graphic object and a text object. Alternatively, the controller 2 determines whether the print data contains an object specified by the CMYK color space and an object specified by the RGB color space.

In the case of determining that a plurality of objects are not contained (S902: NO), the controller 2 executes normal RIP process (S903) and ends the process. Herein, the normal RIP process indicated in S903 is the same as the process indicated in S103 of Fig. 7 and therefore, detailed description of the abovementioned normal RIP process will be omitted.

On the other hand, in the process indicated in S902, in the case of determining that a plurality of objects are contained (S902: YES), the controller 2 executes low-resolution RIP process (S904) and ends the process. Herein, the low-resolution RIP process indicated in S904 is the same as the process indicated in S104 of Fig. 7 and therefore, detailed description of the abovementioned low-resolution RIP process will be omitted.

As described above, according to the processes of the flowchart illustrated in Fig. 19, when print data contains a plurality of objects with different attributes, image data for preview display is generated.

The present invention is not limited to only the abovementioned embodiments and various modifications can be made within the scope of claim for patent.

For example, in the embodiments, in the low-resolution RIP process, RIP process with a specified resolution has been performed. However, in the low-resolution RIP process, RIP process with a specified format of image data in addition to the resolution is possibly performed.

Further, in the embodiments, in the low-resolution RIP process, with no generation of print image data, image data for preview display has been generated. However, in the low-resolution RIP process, print image data is possibly generated together with image data for preview display.

Further, in the embodiments, in the first PDL analysis process, an intermediate file has been generated for every page of print data. However, an intermediate file is possibly generated for only a page necessary for a change in color conversion setting.

Furthermore, in the embodiments, the printer controller for executing RIP process of print data has been provided separately from the printer. However, the printer controller is possibly incorporated in a printing apparatus such as a printer, a multi-function peripheral (MFP), and the like.

The units and method for executing various types of processes in the printing system according to the abovementioned embodiments are able to be realized using any one of a dedicated hardware circuit and a programmed computer. It is possible to provide the program, for example, by a computer readable recording medium such as a flexible disk, a CD-ROM, and the like or in an online manner via a network such as the Internet and the like. In this case, a program stored in a computer readable recording medium is commonly transferred to a storage unit such as a hard disk and the like and then stored therein. Further, the program is possibly provided as a single application software or incorporated in a software of the printing system as one function thereof.

## Claims

1. A printing control apparatus (2) having a storage unit (24), **characterized by** comprising:
a generation unit (21) for generating image data for preview display (100) and attribute data (200) indicating an attribute of each pixel of the image data (100) by analyzing print data described by a page description language, wherein
said storage unit (24) stores the image data for preview display (100) and the attribute data (200) generated by said generation unit (21) in connection with each other.

2. The printing control apparatus (2) according to claim 1, **characterized in that**
said generation unit (21) specifies a resolution of intermediate data generated in the course of a process for analyzing the print data and developing the analyzed print data into print image data as a resolution suitable for preview display and generates the image data for preview display (100) and the attribute data (200) from the intermediate data.

3. The printing control apparatus (2) according to claim 1 or 2, **characterized by** further comprising:
an information determination unit (21) for determining whether the print data contains information to generate the image data for preview display (100), wherein
when said information determination unit (21) determines that the print data contains said information, said generation unit (21) generates the image data for preview display (100) and the attribute data (200).

4. The printing control apparatus (2) according to claim 1 or 2, **characterized by** further comprising:
an object determination unit (21) for determining whether the print data contains a plurality of objects with different attributes, wherein
when said object determination unit (21) determines that the print data contains said plurality of objects, said generation unit (21) generates the image data for preview display (100) and the attribute data (200).

5. A printing system comprising a printing control apparatus and a terminal apparatus (1) connected to said printing control apparatus via a network (4), **characterized in that** said printing control apparatus is a printing control apparatus (2) according to any one of claims 1 to 4, wherein
said printing control apparatus (2) further comprises:
a transmission unit (28) for transmitting the image data for preview display (100) and an attribute data (200) indicating an attribute of each pixel of the image data (100) obtained by analyzing print data described by a page description language,
said terminal apparatus (1) comprises:
a reception unit (17) for receiving the image data for preview display (100) and the attribute data (200);
a color conversion unit (11) for performing color conversion process for the image data for preview display (100) according to an attribute of each pixel specified by the attribute data (200); and
a display unit (15) for displaying an image based on theimagedata (100) subjected to the color conversion process as a preview image.

6. The printing system according to claim 5, **characterized in that**
said terminal apparatus (1) further comprises:
anadjustmentunit (11) for adjusting a color conversion parameter, wherein
said color conversion unit (11) performs the color conversion process for the image data for preview display (100) by using the color conversion parameter adjusted by said adjustment unit (11), and
said display unit (15) displays an image based on the image data (100) subjected to the color conversion process by using the adjusted color conversion parameter.

7. The printing system according to claim 5 or 6, **characterized in that**
said terminal apparatus (1) further comprises:
a recognition unit (11) for recognizing an attribute of an object to be subjected to the color conversion process; and
an erasure unit (11) for erasing objects having attributes other than the attribute recognized by said recognition unit (11) from the image data for preview display (100), wherein
said display unit (15) selectively displays the object to be subjected to the color conversion process.

8. The printing system according to claim 5 or 6, **characterized in that**
said terminal apparatus (1) further comprises:
a notification unit (11) for notifying said printing control apparatus (2) of an attribute of an object to be subjected to the color conversion process,
saidprintingcontrolapparatus (2) further comprises:
an erasure unit (21) for erasing objects having attributes other than the attribute notified by said notification unit (11) from the image data for preview display (100), wherein
saidtransmissionunit (28) transmits image data (100) where objects other than the object to be subjected to the color conversion process are erased to said terminal apparatus (1), and
saiddisplayunit (15) selectively displays the object to be subjected to the color conversion process.

9. A computer readable recording medium stored with a printing control program, said program causing a computer (2) having a storage unit (24) to execute a process, **characterized in that** said process comprises the steps of:
(a) generating image data for preview display (100) and attribute data (200) indicating an attribute of each pixel of the image data (100) by analyzing print data described by a page description language; and
(b) storing the image data for preview display (100) and the attribute data (200) generated in said step (a) in said storage unit (24) in connection with each other.

10. The computer readable recording medium according to claim 9, **characterized in that**
said step (a) specifies a resolution of intermediate data generated in the course of a process for analyzing the print data and developing the analyzed print data into print image data as a resolution suitable for preview display and generates the image data for preview display (100) and the attribute data (200) from the intermediate data.

11. The computer readable recording medium according to claim 9 or 10, **characterized in that**
said process further comprises the step of:
(c) determining whether the print data contains information to generate the image data for preview display (100),
whereby said step (a) generates the image data for preview display (100) and the attribute data (200) when said step (c) determines that the print data contains said information.

12. The computer readable recording medium according to claim 9 or 10, **characterized in that**
said process further comprises the step of:
(d) determining whether the print data contains a plurality of objects with different attributes,
whereby said step (a) generates the image data for preview display (100) and the attribute data (200) when said step (d) determines that the print data contains said plurality of objects.
